Europäisches Patentamt

European Patent Office

Office européen des brevets

(19)

(11) **EP 0 932 490 B2**

(12) **NOUVEAU FASCICULE DE BREVET EUROPEEN**

(45) Date de publication et mention de la décision concernant l'opposition:
**12.07.2006 Bulletin 2006/28**

(45) Mention de la délivrance du brevet:
**14.11.2001 Bulletin 2001/46**

(21) Numéro de dépôt: **97919126.9**

(22) Date de dépôt: **18.09.1997**

(51) Int Cl.:
*B29C 49/08* (2006.01)  *B29C 49/14* (2006.01)
*B29C 49/16* (2006.01)  *B29C 57/08* (2006.01)
*B29C 55/26* (2006.01)  *F16L 47/06* (2006.01)
*B29C 49/64* (2006.01)

(86) Numéro de dépôt international:
**PCT/FR1997/001652**

(87) Numéro de publication internationale:
**WO 1998/013190 (02.04.1998 Gazette 1998/13)**

(54) **PROCEDE ET INSTALLATION DE FABRICATION DE TUBES EN MATIERE PLASTIQUE AVEC ETIRAGE BI-AXIAL**

VERFAHREN UND VORRICHTUNG ZUM HERSTELLEN VON ROHREN AUS PLASTIK MIT BIAXIALERSTRECKUNG

METHOD AND INSTALLATION FOR MAKING PLASTIC TUBES WITH BI-AXIAL DRAWING

(84) Etats contractants désignés:
**AT BE CH DE DK ES FI FR GB GR IE IT LI LU NL PT SE**

(30) Priorité: **26.09.1996 FR 9611704**

(43) Date de publication de la demande:
**04.08.1999 Bulletin 1999/31**

(73) Titulaire: **Alphacan**
**78170 La Celle-Saint-Cloud (FR)**

(72) Inventeurs:
• **PREVOTAT, Bernard**
**F-78150 Le Chesnay (FR)**

• **ACKET, Jean-Jacques**
**F-58000 Challuy (FR)**

(74) Mandataire: **Michardière, Bernard et al**
**Cabinet Armengaud Aîné**
**3, Avenue Bugeaud**
**75116 Paris (FR)**

(56) Documents cités:
| EP-A- 0 072 064 | EP-A- 0 404 557 |
| DE-A- 3 428 191 | DE-B- 2 705 775 |
| GB-A- 1 432 539 | GB-A- 2 207 630 |
| GB-B- 1 589 052 | NL-A- 9 400 894 |
| US-A- 4 098 857 | US-A- 4 499 045 |

EP 0 932 490 B2

## Description

L'invention est relative à un procédé de fabrication de tubes en matière plastique, du genre selon lequel on fait subir un étirage bi-axial à un tube-ébauche porté à une température voisine de sa température d'orientation moléculaire, par dilatation radiale du tube-ébauche à l'intérieur d'un fût de formage dont le diamètre interne est égal au diamètre souhaité pour le tube en matière plastique, à la dilatation thermique près, avec formation d'une bulle à une extrémité du tube, déplacement contrôlé de cette bulle jusqu'à l'autre extrémité du tube, et avec étirage longitudinal.

Un tel procédé permet de fabriquer des tubes en matière plastique orientés moléculairement, dont les propriétés mécaniques sont améliorées.

GB-A-1 432 539 enseigne un tel procédé sous une forme qui, toutefois, se révèle difficilement applicable à des tuyaux de grande longueur. En effet, durant la mise sous pression, le gonflage (formation de la bulle) et donc l'orientation moléculaire s'initient souvent en plusieurs endroits en même temps ; ce phénomène difficilement contrôlable provoque des variations d'épaisseur importantes dans le sens longitudinal et même des plis à la rencontre de deux fronts de dilatation.

US-A-4 098 857 apporte une amélioration au procédé de bi-orientation évoqué ci-dessus par utilisation, à l'intérieur d'un moule, d'un fourreau enserrant l'ébauche. Au début de l'opération, le fourreau confine l'expansion radiale puis est progressivement retiré pour laisser progresser la zone d'étirage.

EP-B-0 072 064 utilise aussi un tel fourreau enserrant une ébauche de tube; lors de la fabrication, le fourreau est progressivement retiré, et un système de contre-pression est prévu pour régler le déplacement axial du fourreau équipé à une extrémité (en contact avec la paroi du tube-ébauche en cours d'étirage) d'un piston annulaire de forme tronconique évasée. L'étirage longitudinal du tube-ébauche est essentiellement obtenu par le frottement du fourreau sur la section du tube lors de son déplacement relatif le long du tube. Une telle solution permet, certes, de contrôler le déplacement de la bulle, mais fait intervenir des forces de frottement pour assurer l'étirage longitudinal ; or on sait qu'il est difficile de contrôler avec précision les forces de frottement entre deux pièces en mouvement de sorte que l'étirage longitudinal risque de présenter des variations sensibles le long du tube. En outre, le frottement du fourreau contre la surface externe du tube en matière plastique peut créer des défauts d'aspect sur cette surface.

EP-A-0 404 557 vise à fournir une commande positive de l'étirage longitudinal du tube-ébauche, commande absente du procédé évoqué ci-dessus.L'extrémité du tube-ébauche, opposée à celle où se forme initialement la bulle, est bloquée dans un piston qui exerce un effort d'étirage sur le tube-ébauche, de sorte que le frottement entre tube-ébauche et fourreau n'est plus nécessaire pour assurer un tel effort d'étirage. Le procédé selon EP-A-0 404 557 permet donc d'améliorer l'homogénéité du degré d'étirage longitudinal sur la longueur du tube.

Toutefois, pour que l'étirage du tube en matière plastique puisse s'effectuer dans de bonnes conditions , ce tube doit être porté et maintenu à une température appropriée, voisine de sa température d'orientation moléculaire, par un fluide chaud qui, selon EP-A-0 404 557, circule non seulement dans le tube-ébauche en matière plastique, mais aussi autour du fourreau. Le fluide chaud qui passe autour du fourreau est au contact direct de la surface interne du fût de formage qui est ainsi maintenue à une température relativement élevée.

En fin de dilatation radiale, la matière plastique du tube-ébauche, selon EP-A-0 404 557, vient au contact de la surface interne chaude du fût de formage et ne se fige pas rapidement, même si comme prévu un fluide froid est mis en circulation à l'intérieur du tube en matière plastique. Ce refroidissement relativement lent de la couche extérieure du tube contribue à augmenter la durée du cycle de formage et à réduire la productivité du procédé.

L'invention vise à rendre la dilatation radiale homogène selon toute la longueur du tube, malgré l'importance de cette dilatation.

L'invention vise en outre à fournir un procédé qui reste relativement simple et économique pour sa mise en oeuvre.

De préférence, l'invention vise également à fournir un procédé permettant de réaliser une emboîture, à une extrémité du tube, avec gorge pour recevoir un joint d'étanchéité, tout en assurant une épaisseur quasiment constante du tube obtenu sur toute sa longueur, y compris au niveau de l'emboîture.

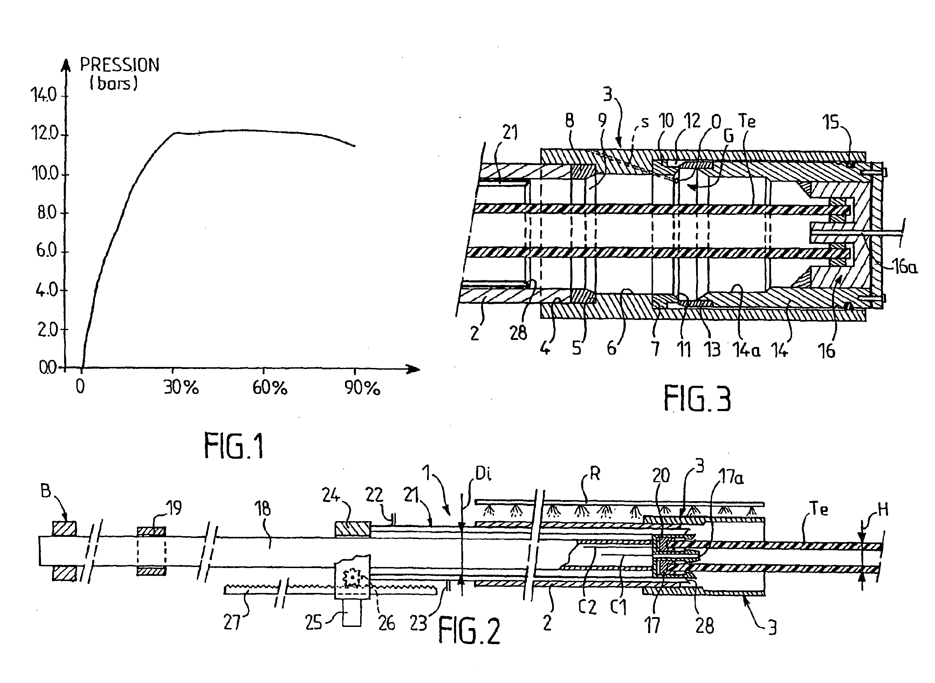

L'invention s'appuie sur une analyse du phénomène d'expansion d'un tube-ébauche par augmentation de la pression interne, et sur des considérations à propos des contraintes réelles générées dans l'épaisseur du tube. La Figure 1 des dessins annexés est un diagramme illustrant les variations de diamètre, exprimées en pourcentage et portées en abscisse, d'un tube en matière plastique (à température voisine de la température d'orientation moléculaire) soumis à une pression interne dont la valeur est portée en ordonnée. Il apparaît que les variations de diamètre se décomposent en plusieurs étapes :

- une première étape, correspondant à une partie sensiblement rectiligne ascendante, caractérise une augmentation homogène du diamètre du tube jusqu'à environ 30 %, avec l'augmentation de la pression interne ;
- une deuxième étape pour laquelle la contrainte dans la paroi passe par un maximum puis redescend très légèrement pour se stabiliser à une valeur constante pendant que le diamètre augmente : c'est le phénomène de bulle.

Ce phénomène peut se terminer par une troisième étape où la valeur de la contrainte réelle dans la paroi décroît légèrement.

Pour la fabrication, il est donc indispensable de monter la pression interne du tube jusqu'à une valeur critique pour voir démarrer une bulle, puis de stabiliser cette pression pour éviter l'éclatement rapide du tube.

Dans la première étape, correspondant à l'augmentation homogène du diamètre du tube, l'élongation circonférentielle, provoquée par la dilatation, reste inférieure ou égale au seuil d'écoulement de la matière du tube. Dans la deuxième étape, correspondant au phénomène de bulle, l'élongation circonférentielle dépasse le seuil d'écoulement de la matière du tube.

Le procédé de l'invention, en vue de rendre le phénomène d'expansion aussi homogène que possible, est caractérisé par le fait que la dilatation radiale est réalisée en au moins deux phases, à savoir:

une première phase au cours de laquelle le tube-ébauche est gonflé de manière homogène jusqu'à un diamètre intermédiaire, inférieur au diamètre interne du fût de formage, pour lequel l'élongation circonférentielle reste inférieure ou égale au seuil d'écoulement de la matière du tube, cette première phase s'accomplissant pratiquement sans étirage longitudinal, suivie de la formation d'une bulle à une extrémité du tube et au moins une autre phase pour le passage au diamètre interne du fût de formage, avec étirage longitudinal.

De préférence, le diamètre intermédiaire est déterminé en introduisant dans le fût de formage une enveloppe coulissante dont le diamètre interne est égal au diamètre intermédiaire et, après la première phase de dilatation, cette enveloppe est progressivement sortie du fût de formage pour permettre la deuxième phase de dilatation radiale.

Avantageusement, l'enveloppe coulissante est une enveloppe à double paroi, avec circulation d'un fluide chaud entre les deux parois de l'enveloppe.

De préférence, le fût de formage est refroidi extérieurement.

La présence de l'enveloppe à double paroi avec circulation interne de fluide chaud permet le maintien en température du tube-ébauche en évitant un chauffage direct de la surface interne du fût de formage, grâce à quoi la durée du cycle de formage est réduite et la productivité augmentée.

L'étirage longitudinal du tube, réalisé essentiellement au cours de la seconde phase, est obtenu en bloquant les deux extrémités du tube-ébauche dans des moyens de serrage respectifs, et en éloignant les moyens de serrage d'une extrémité des moyens de serrage de l'autre extrémité du tube.

Avantageusement, on insuffle un gaz sous pression, notamment de l'air comprimé, entre la paroi externe du tube en matière plastique et la paroi interne de l'enveloppe pour faciliter le glissement relatif de ces deux parties au moment de la sortie de l'enveloppe, et éviter un frottement parasite.

De préférence un espace libre subsiste, à l'intérieur du fût de formage, entre l'extrémité de l'enveloppe coulissante totalement engagée dans le fût et l'extrémité voisine du fût, cet espace libre permettant la naissance de la bulle, par augmentation de la pression interne dans le tube-ébauche, sans avoir à déplacer au préalable l'enveloppe coulissante.

L'extrémité du tube en matière plastique, éloignée de la zone de formation de la bulle, peut être poussée vers cette zone au moment de la naissance de la bulle pour provoquer une augmentation de l'épaisseur de la matière permettant d'obtenir une bulle d'épaisseur sensiblement égale à celle de la partie restante du tube.

Avantageusement on réalise sur le tube en matière plastique une emboîture avec rainure pour recevoir un joint d'étanchéité, lors de la formation de la bulle à une extrémité du tube.

De préférence, lors de la venue en contact de la paroi de la bulle avec la paroi de moule d'emboîture, on pousse l'extrémité voisine du tube vers l'emboîture pour obtenir une épaisseur de paroi au niveau de la gorge pour le joint sensiblement égale à celle du reste de l'emboîture et du tube.

Avantageusement on refroidit extérieurement le fût de formage par arrosage ou régulation.

L'invention est également relative à une installation pour la mise en oeuvre du procédé défini précédemment, cette installation comportant un fût de formage dans lequel est engagé le tube-ébauche, et des moyens d'obturation et de serrage de chaque extrémité du tube-ébauche, ainsi que des moyens pour faire circuler un fluide, notamment un liquide, dans le tube-ébauche et faire varier la pression de ce liquide, et est caractérisée par le fait qu'elle comporte une enveloppe à double paroi, et des moyens pour faire circuler un fluide chaud, en particulier à température voisine de la température d'orientation dans cette enveloppe, laquelle est montée coulissante dans le fût de formage et détermine, par son diamètre intérieur, un diamètre intermédiaire de dilatation, cette enveloppe entourant une extrémité du tube-ébauche qui est munie de moyens de serrage formant un piston monté coulissant dans l'enveloppe et solidaire d'un cylindre se prolongeant au-delà de l'extrémité de l'enveloppe, des moyens d'entraînement en coulissement indépendants étant prévus respectivement pour l'enveloppe et le cylindre muni du piston.

Le piston monté à l'extrémité du cylindre comporte de préférence des moyens de passage pour insuffler un gaz sous pression, notamment de l'air comprimé, entre la paroi externe du tube en matière plastique et la paroi interne de l'enveloppe et faciliter leur coulissement relatif.

Avantageusement, l'installation comporte à l'extrémité du fût de formage opposée au cylindre muni du piston, des moyens de serrage de l'extrémité du tube en matière plastique formant également moyens d'obturation du fût de formage et définissant un moule pour une emboîture en bout du tube en matière plastique.

Le moule ainsi défini pour l'emboîture comporte au moins deux parties déterminant une rainure pour un joint d'étanchéité et montées coulissantes l'une par rapport à l'autre, la partie située axialement vers l'extérieur du tube en matière plastique étant apte à se rapprocher de l'autre partie pour amener de la matière au niveau de la gorge pour le joint et permettre d'obtenir une paroi d'épaisseur sensiblement constante tout le long de l'emboîture.

Avantageusement des moyens de détection do la venue de Ja paroi de l'emboîture contre la partie correspondante du moule sont prévus pour déclencher le déplacement de l'autre partie du moule lorsque le contact s'établit.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La Figure 1, de ces dessins, est un diagramme représentant l'augmentation de diamètre d'un tube en matière plastique, portée en abscisse et exprimée en pourcentage, alors que la pression à l'intérieur du tube, exprimée en bars (1 bar = $10^5$ Pa), est portée en ordonnée.

La Figure 2 est un schéma simplifié avec parties arrachées d'une installation conforme à l'invention.

La Figure 3 montre en coupe, à plus grande échelle, l'extrémité du fût de formage équipée de moyens pour définir un moule pour une emboîture.

La Figure 4 est un schéma simplifié représentant, en coupe, le tube-ébauche mis en place à l'intérieur du fût de formage.

La Figure 5 montre, semblablement à la Figure 4, le tube gonflé à la fin de la première phase de dilatation radiale.

La Figure 6 montre, semblablement à la Figure 5, une étape suivante du procédé, précédant la formation de l'emboîture.

La Figure 7 illustre la formation de l'emboîture.

La Figure 8 montre en coupe à plus grande échelle un détail de la réalisation de l'emboîture.

La Figure 9 est un schéma semblable à celui de la Figure 7 illustrant la propagation de la bulle et la dilatation radiale complémentaire du tube.

La Figure 10 est une vue schématique en coupe de l'installation faisant apparaitre une insufflation d'air comprimé lors de la phase illustrée sur la Figure 9.

La Figure 11 est un diagramme illustrant le cycle de formage.

La Figure 12, enfin, est une section partielle à plus grande échelle de l'emboiture.

En se reportant aux dessins, on retrouve la Figure 1 montrant le diagramme déjà décrit.

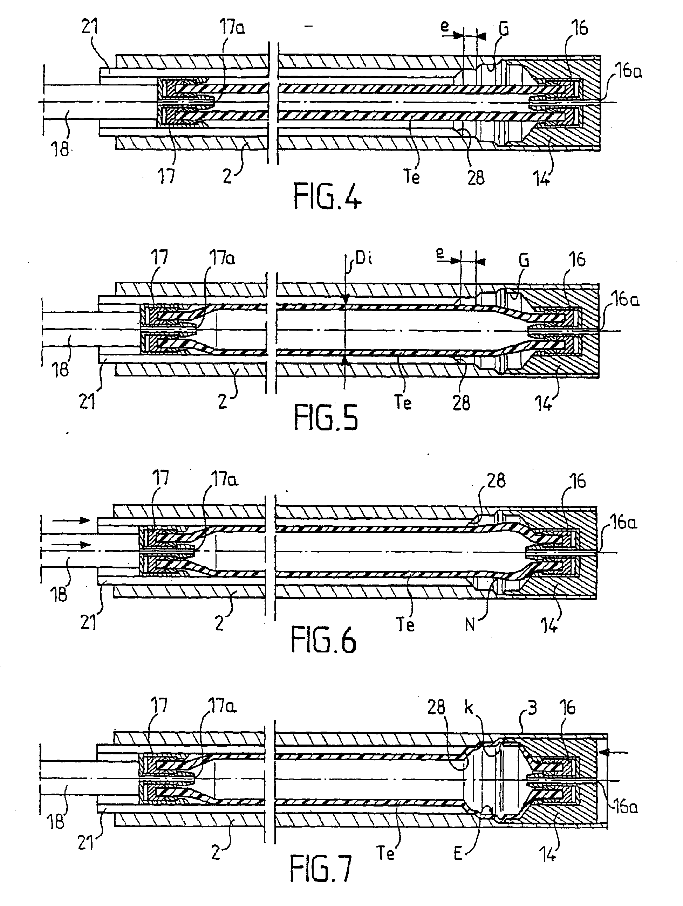

La Figure 2 montre schématiquement et partiellement une installation 1 de fabrication de tubes en matière plastique bi-orientés. Cette installation comprend un fût de formage 2 constitué par un tube cylindrique métallique, par exemple en acier, servant de moule pour le produit fini à obtenir ; le diamètre intérieur du fût de formage 2 est légèrement supérieur au diamètre extérieur du tube en matière plastique bl-orlenté fini, pour tenir compte du retrait thermique. Le fût de formage 2 est muni, à l'une de ses extrémités (l'extrémité droite selon la Figure 2), d'un manchon 3 constituant une partie d'un moule pour le formage d'une emboîture E (Figures 7-10) à l'extrémité correspondante du tube en matière plastique T.

La paroi extérieure du fût de formage 2 est refroidie par pulvérisation d'eau sur la surface extérieure du fût 2 à l'aide d'une rampe d'arrosage R. Le refroidissement de la paroi extérieure du manchon 3 est également assuré, de préférence avec une régulation thermique à une température située dans la plage de 20°C à 30°C.

Comme représenté plus en détail sur la Figure 3, le manchon 3 comporte, à son extrémité tournée vers la fût 2, un alésage 4 de diamètre égal au diamètre extérieur du fût 2 engagé dans cet alésage. Le manchon 3 est assemblé au fût 2 par tout moyen approprié, notamment par soudage. L'alésage 4 est délimité intérieurement par un épaulement radial 5 assurant la transition avec un autre alésage 6 de diamètre inférieur à celui de l'alésage 4, mais supérieur au diamètre intérieur du fût 2. Un décrochement radial 7 assure la transition entre l'alésage 6 et un alésage terminal de plus grand diamètre et de plus grande longueur, s'étendant jusqu'à l'extrémité extérieure du manchon 3.

Entre l'extrémité du fût 2 et l'épaulement 5 est disposée une bague métallique 8 dont le diamètre interne, du côté tourné vers le fût 2, est égal au diamètre interne de ce fût, puis augmente progressivement pourformer un chanfrein tronconique 9 dont le grand diamètre est égal au diamètre de l'alésage 6. Cet alésage 6 détermine la surface extérieure de l'emboîture E ; son diamètre est choisi de telle sorte que le diamètre interne de l'emboîture E, au niveau de l'alésage 6, permette de recevoir à frottement doux le diamètre extérieur d'un tube T fini en matière plastique, semblable à celui muni de l'emboîture E.

Une autre bague 10 est en appui axial contre le décrochement 7. L'alésage intérieur de cette bague 10 a même diamètre que l'alésage 6 et s'ouvre, du côté opposé à l'alésage 6, par un chanfrein tronconique 11 qui détermine une zone de paroi de moule servant à former une nervure externe sur le tube T fini. A cette nervure correspond, sur la paroi interne du tube, une rainure k (Fig.7) pour recevoir un joint d'étanchéité. La bague 10 présente, sur sa surface cylindrique externe, un dégagement périphérique 12 au niveau deson extrémitémunie du chanfrein 11. Ce dégagement 12 permet de définir un espace annulaire propre à recevoir une couronne cylindrique 13, avec possibilité de coulissement axial. Cette couronne 13 en saillie est solidaire de l'extrémité d'un manchon 14 engagé dans l'alésage du manchon 3 à frottement doux. Le manchon 14 présente un alésage interne 14a ayant même diamètre que l'alésage 6.

Le profil interne du manchon 14, en combinaison avec celui du manchon 3 et de la surface cylindrique interne de la couronne 13, définit l'empreinte G pour l'emboîture E. Dans l'exemple de réalisation de la Figure 2, le profil interne du manchon 14 est sensiblement symétrique du profil de la partie du manchon 3 située à gauche de la couronne 13, par rapport au plan moyen de cette couronne. La section transversale de la rainure k pour le joint d'étanchéité peut avoir une forme autre que celle en V illustrée sur les dessins, par exemple une forme rectangulaire.

Une gorge 15 est prévue sur la surface extérieure du manchon 14 pour la mise en place d'un joint d'étanchéité entre les manchons 3 et 14.

Un dispositif 16 d'obturation et de serrage de l'extrémité voisine du tube-ébauche Te est prévu pour être fixé, de manière étanche, sur l'extrémité extérieure du manchon 14. Le dispositif d'obturation 16 peut être agencé pour assurer, par compression axiale d'une bague en matière élastomère, un serrage radial de l'extrémité du tube-ébauche Te propre à établir l'étanchéité et le maintien par serrage de cette extrémité. Des moyens (non représentés) sont prévus pour déplacer en coulissement le manchon 14 relativement au manchon 3 et pour l'immobiliser dans la position souhaitée.

L'autre extrémité du tube-ébauche Te est fermée de manière étanche et bloquée dans un dispositif d'obturation et de serrage 17 (Figure 2), semblable au dispositif 16, constituant un piston solidaire de l'extrémité d'un tube cylindrique métallique 18 s'étendant du côté opposé au manchon 3.

Les deux dispositifs d'obturation 16, 17 sont traversés axialement par un canal respectif 16a, 17a pour une introduction et/ou une circulation de fluide, généralement de l'eau, à l'intérieur du tube Te.

Le tube 18, coaxial au fût de formage 2, peut coulisser dans un guide 19 du côté de son extrémité éloignée du fût 2 et est serré par un dispositif d'entraînement B propre à déplacer le tube 18 suivant la direction axiale. Une conduite C1, notamment une conduite flexible, s'étend à l'intérieur du tube 18 et est raccordée au canal 17a pour introduire le fluide dans le tube Te.

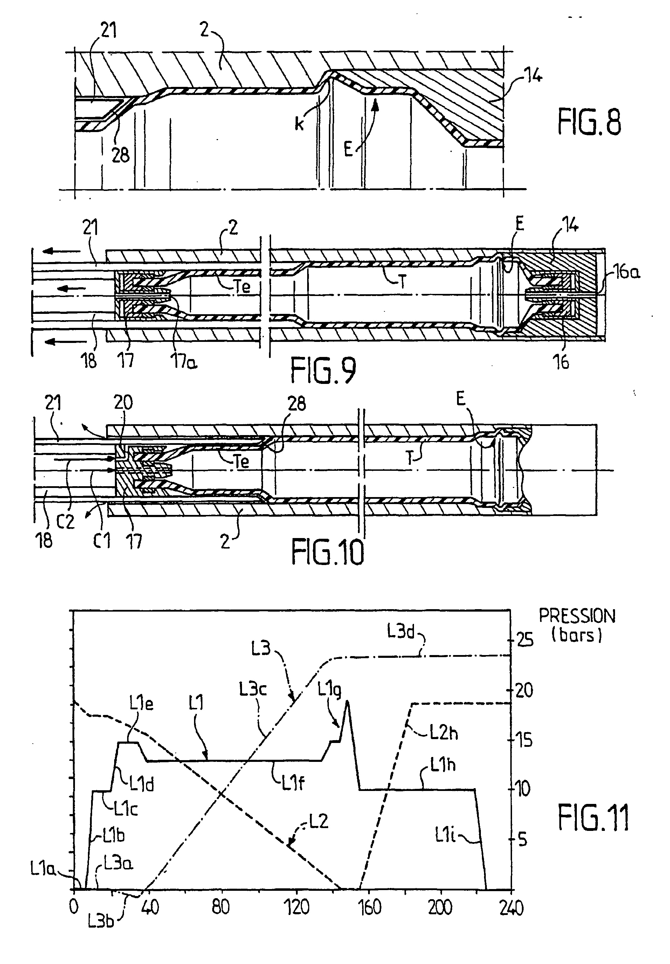

Une autre conduite C2, par exemple formée aussi par un tuyau flexible, s'étend dans le tube 18 et est raccordée à un canal 20 (Figures 2 et 10) prévu dans le dispositif d'obturation 17 formant piston ; ce canal 20 comporte une partie orientée radialement débouchant sur la surface périphérique cylindrique externe du piston 17.

Une enveloppe 21 (ou fourreau) à deux parois cylindriques coaxiales de diamètre différent, déterminant entre elles une chambre annulaire, est montée coulissante dans le fût de formage 2. Le diamètre intérieur Di de l'enveloppe 21 est égal au diamètre extérieur du piston obturateur 17 qui peut coulisser à frottement doux. Le diamètre extérieur de l'enveloppe 21 est légèrement inférieur au diamètre intérieur du fût 2.

L'enveloppe 21 détermine une chambre intérieure fermée axialement à ses deux extrémités longitudinales, et équipée de deux ajutages 22, 23 schématiquement représentés sur la Figure 2, pour une circulation de fluide chaud, en particulier pour une circulation d'huile à une température voisine de la température d'orientation moléculaire de la matière plastique du tube Te. Dans le cas où le tube en matière plastique est en PVC, dont la température d'orientation moléculaire est située dans une plage de 90°C à 110°C environ, on fait avantageusement circuler dans l'enveloppe 21 de l'huile chaude à une température de l'ordre de 100°C.

A son extrémité extérieure, l'enveloppe 21 est fixée à un dispositif de maintien et d'entraînement 24 comportant un motoréducteur électrique 25 propre à entraîner un pignon 26 coopérant avec une crémaillère 27 montée fixe par rapport au fût de formage 2, parallèlement à l'axe de ce fût.

Le diamètre intérieur Di de l'enveloppe 21 est déterminé pour correspondre au diamètre extérieur du tube-ébauche Te lorsque ce dernier a subi une expansion entraînant un allongement circonférentiel de la matière plastique au plus égal au seuil d'écoulement de la matière plastique.

Comme déjà expliqué à propos de la Figure 1, ce diamètre correspond à une augmentation d'environ 30 % du diamètre extérieur de départ H du tube-ébauche cylindrique Te.

La longueur de l'enveloppe 21 est choisie de telle sorte que, lorsque cette enveloppe 21 est entrée pratiquement complètement dans le fût de formage 2, comme illustré sur la Figure 4, l'enveloppe 21 recouvre presque toute la longueur du tube-ébauche Te, à l'exception de la zone d'extrémité située au niveau de la cavité G pour mouler l'emboîture E ,et d'une zone cylindrique de longueur réduite e s'étendant à partir de cette cavité G du côté opposé à l'obturateur 16.

De préférence, l'extrémité frontale 28 de l'enveloppe 21, tournée vers la zone d'emboîture, a un e forme tronconique évasée propre à assurer une transition progressive entre le diamètre interne de l'enveloppe 21 et le diamètre interne du fût 2.

On prévoit avantageusement dans le manchon 3 (Figure 3) un dispositif S pour détecter l'arrivée contre le chanfrein 11 de la matière plastique en cours de dilatation. Ce dispositif S comprend de préférence une fibre optique reliée à un appareillage d'émission et de réception de lumière (non montré) permettant la détection optique de l'approche de la matière plastique. Le logement prévu pour le passage de la fibre optique débouche par un orifice O dans le passage interne de la bague 10 , au voisinage du chanfrein 11.

En variante, une détection par ultra-sons peut être envisagée.

Ceci étant, le fonctionnement de l'installation mettant en oeuvre le procédé de fabrication conforme à l'invention est le suivant.

Une ébauche cylindrique Te de tube en matière plastique est d'abord mise en place à l'intérieur du fût de formage 2. Cette ébauche Te a un diamètre extérieur H inférieur au diamètre du tube fini souhaité et une épaisseur relativement forte, supérieure à celle du tube fini. A titre d'exemple, un tube-ébauche Te en PVC peut avoir un diamètre extérieur initial de 85 mm avec une épaisseur de 20 mm tandis que le tube fini bi-orienté a un diamètre de 160 mm ; le diamètre intermédiaire Di, correspondant à la dilatation radiale homogène, est d'environ 125 mm pour cet exemple.

De préférence le tube-ébauche Te arrive à une température voisine de sa température d'orientation moléculaire, en provenance par exemple d'une installation de traitement de tubes en matière plastique.

Pour la mise en place du tube-ébauche Te, le manchon 14 (Figure 3) est retiré du manchon 3 et le tube cylindrique 18 est poussé vers la droite de telle sorte que le dispositif d'obturation et de serrage 17 soit accessible au-delà du manchon 3 pour permettre la prise de l'extrémité gauche de l'ébauche Te.

Lorsque la fixation de l'extrémité de l'ébauche Te dans le dispositif 17 est réalisée, le tube 18 et son piston obturateur 17 sont déplacés vers la gauche de la Figure 2 et entraînent l'ébauche Te à l'intérieur du fût 2 et de l'enveloppe 21 dont la position est celle illustrée sur la Figure 4.

Cette mise en place de l'ébauche Te chaude est réalisée en évitant tout contact de l'ébauche Te avec des pièces froides, par exemple à la température ambiante.

Lorsque l'extrémité droite (selon les dessins) de l'ébauche Te arrive au voisinage du manchon 3, le dispositif d'obturation 16 est fixé à l'extrémité de l'ébauche et est ensuite bloqué dans le manchon 14 qui est enfin mis en place dans le manchon 3 ; un jeu longitudinal subsiste dans l'espace 12 entre la bague 10 et la couronne 13, permettant un coulissement ultérieur du manchon 14.

En fin d'introduction du tube-ébauche Te, la configuration est celle illustrée sur la Figure 4. On voit que l'enveloppe 21 laisse découverte la zone intérieure G.

On introduit dans l'ébauche Te, par la conduite C1 et le canal 17a, un fluide chaud, à une température voisine de la température d'orientation moléculaire de la matière plastique de l'ébauche. Dans le cas du PVC, le fluide introduit dans l'ébauche Te est formé par de l'eau chaude à une température proche de 100°C. Après avoir assuré la fermeture du canal 16a par une valve (non représentée), on augmente la pression d'eau dans l'ébauche Te pour provoquer la première phase d'expansion radiale homogène du tube qui vient se plaquer contre la surface interne de l'enveloppe 21, elle-même chaude grâce à la circulation d'huile à l'intérieur

Comme déjà expliqué, cette première phase de dilatation radiale du tube correspond à une expansion avec un allongement circonférentiel de la matière ne dépassant pas le seuil d'écoulement de la matière plastique. Dans la zone correspondant à l'empreinte de l'emboîture, où l'ébauche Te n'est pas recouverte par l'enveloppe, la dilatation reste homogène. Lors de cette première phase de dilatation radiale, les dispositifs d'obturation 16 et 17 restent en position fixe suivant la direction axiale. L'épaisseur de l'ébauche diminue, et la matière ne subit pratiquement pas d'étirage longitudinal. La situation est celle illustrée sur la Figure 5.

Comme schématisé sur la Figure 6, on applique alors une poussée axiale sur l'extrémité gauche du tube-ébauche Te, par l'intermédiaire du piston obturateur 17 et du tube cylindrique 18 poussé par le dispositif B (Fig.2), vers la zone de l'emboîture. Une poussée axiale est appliquée simultanément sur l'enveloppe 21 pour la déplacer également vers la zone d'emboîture de manière à compenser la distance _e_ . Le déplacement simultané du tube-ébauche Te et de l'enveloppe 21, de préférence à la même vitesse, évite tout frottement parasite susceptible d'endommager la surface extérieure de l'ébauche Te.

La matière de la zone N non recouverte du tube-ébauche Te est ainsi comprimée et son épaisseur augmente.

La pression d'eau chaude à l'intérieur de l'ébauche Te est ensuite augmentée pour générer l'apparition d'une bulle dans la zone N et la formation de l'emboîture E comme illustré sur la Figure 7. Au cours de cette phase de dilatation, l'allongement circonférentiel de la matière dépasse le seuil d'écoulement de la matière plastique. L'augmentation d'épaisseur dans la zone N, réalisée lors de l'étape de la Figure 6 , permet d'obtenir, pour les parois de l'emboîture E, une épaisseur pratiquement constante et égale à l'épaisseur du tube fini T dans la partie autre que l'emboiture , épaisseur suffisante pour obtenir les caractéristiques de tenue à la pression de l'emboîture.

Comme déjà expliqué, une gorge k est réalisée dans cette emboîture pour recevoir un joint d'étanchéité. La réalisation de la paroi limitant cette gorge k est délicate, notamment en ce qui concerne la forme, les dimensions, et l'épaisseur de la paroi au niveau de cette gorge.

Selon l'invention, pour obtenir une gorge k aussi précise que possible, on opère comme suit. Peu avant le contact de la paroi de la bulle, en cours de dilatation, avec la surface froide du tube de formage 2 au niveau de son manchon 3 (Figure 3), on applique une poussée axiale sur le manchon 14 comme illustré par une flèche sur la Figure 7, vers le piston 17. La couronne 13 s'engage alors plus profondément dans l'espace 12 de la Figure 3. Le résultat est un épaississement de la paroi de la bulle en cours de formation et principalement au niveau de la future gorge k qui, en fin de réalisation, aura l'épaisseur correcte souhaitée.

L'application de la poussée sur le manchon 14 est commandée par le détecteur S à fibre optique . La Figure 8 illustre à plus grande échelle la situation en fin d'avance du manchon 14.

La paroi de l'emboîture E est refroidie en forme au contact de la paroi froide du fût de formage 2.

On assure ensuite une diminution de la pression à l'intérieur de l'ébauche Te pour la décoller de la paroi intérieure de l'enveloppe 21. Cette enveloppe 21 est alors déplacée vers la gauche comme illustré sur la Figure 9, pour découvrir petit à petit la surface de l'ébauche Te. La pression à l'intérieur de cette ébauche reste suffisante pour assurer la deuxième phase de dilatation radiale et la propagation de la bulle. Peu après le début du mouvement vers la gauche (selon la Figure 9) de l'enveloppe 21, le déplacement dans le même sens du tube cylindrique 18, tirant l'obturateur 17 et l'ébauche Te, est commandé. On provoque ainsi un étirage longitudinal de l'ébauche Te en même temps qu'elle subit une expansion diamétrale. L'entraînement de l'enveloppe 21 est assuré par la mise en marche du moteur 25 (Figure 2) entraînant le pignon 26 coopérant avec la crémaillère 27. Tout autre dispositif équivalent autorisant un déplacement longitudinal, tel que guide à billes ou système hydraulique pourrait être utilisé.

L'enveloppe 21 se déplace à une vitesse supérieure à celle de l'obturateur 17 et la bulle arrive au voisinage de l'obturateur 17 à la fin du cycle de formage.

Pour éviter tout frottement entre l'ébauche Te et l'enveloppe 21, comme illustré sur la Figure 10, on insuffle de l'air comprimé par le canal 20 dans l'espace compris entre l'ébauche Te et la surface interne de l'enveloppe 21. L'air se déplace vers l'extrémité 28 de l'enveloppe 21, contourne cette extrémité et revient, en sens inverse, entre la surface externe de l'enveloppe 21 et la surface interne du fût de formage 2 pour s'échapper à l'atmosphère. Cette insufflation d'air peut s'effectuer dès le début du mouvement vers la gauche de l'enveloppe 21. La pression d'air utilisée dans cette phase est relativement basse, notamment de l'ordre de 4 bars.

L'étirage longitudinal de l'ébauche Te est donc parfaitement contrôlé par le déplacement commandé de l'obturateur 17 et la surface extérieure de l'ébauche Te est préservée de toute dégradation par frottement.

Le fût de formage 2 étant maintenu froid, la paroi du tube en matière plastique, lors de la propagation de la bulle illustrée sur la Figure 9, vient donc immédiatement au contact d'une paroi froide et se fige rapidement, ce qui permet de réduire sensiblement la durée du cycle de formage. Il est à noter que la surface interne du fût de formage 2 reste à une température relativement basse car la circulation d'huile chaude s'effectue à l'intérieur de l'enveloppe 21; une transmission éventuelle de chaleur entre la paroi externe de l'enveloppe 21 et la paroi interne du fût de formage 2 ne peut s'effectuer que par contact entre parois solides ou à travers un jeu radial et une couche d'air de faible épaisseur. La transmission de chaleur est donc sensiblement réduite par rapport au cas où le fluide chaud , destiné à maintenir l'ébauche Te à température appropriée pour l'opération de formage de la bulle, circule directement contre la paroi interne du fût de formage 2. Dans ce dernier cas, le refroidissement du tube T qui vient d'être formé serait plus long, ce qui augmenterait la durée de cycle de formage et conduirait à une productivité nettement inférieure à celle de l'invention.

Lorsque le cycle de formage est terminé, on introduit de l'eau froide dans le tube fini T pour réduire sa température et figer la matière, avant de l'extraire du fût de formage 2.

Comme l'augmentation de diamètre du tube en matière plastique lors de la phase de propagation de la bulle illustrée sur la Figure 9 est relativement faible, il n'est pas nécessaire d'assurer à l'extrémité 28 de l'enveloppe 21 une géométrie particulière. La paroi de la bulle a une résistance à la pression suffisante pour se tenir seule, sans avoir à s'appuyer contre une surface déterminée.

Le piston obturateur 17 permet de suivre et/ou de piloter l'expansion axiale du tube pendant le développement de la bulle.

La Figure 11 est un diagramme illustrant les variations de divers paramètres lors du cycle de formage. Sur ce diagramme trois courbes L1, L2, L3 illustrent respectivement:

- pour L1, les variations de la pression à l'intérieur de l'ébauche,
- pour L2, les variations du niveau d'eau dans une cuve à partir de laquelle l'eau chaude est prélevée pour être injectée dans l'ébauche Te et est renvoyée à cette cuve lors de l'introduction d'eau froide dans l'ébauche,
- et pour L3, le déplacement du piston obturateur 17 et de l'extrémité correspondante de l'ébauche.

Pour L1, les variations de pression exprimées en bars (ou $10^5$ Pa) sont portées en ordonnée en fonction du temps, exprimé en secondes, porté en abscisse. Le premier segment horizontal L1 a, à pression relative nulle, correspond au remplissage du tube-ébauche ; il est suivi par un segment ascendant L1b correspondant à l'augmentation de pression dans le tube. Le segment horizontal suivant L1c correspond à la circulation d'eau dans le tube-ébauche à pression constante. Le segment ascendant suivant L1d correspond à l'augmentation de pression pour la formation de la bulle ; la pression est maintenue sur le segment horizontal L1e puis est diminuée pour rester au niveau du palier L1f pendant la propagation de la bulle surtoute la longueur du tube (étape de la Figure 9). En fin de formage la pression peut être augmentée à nouveau selon le pic L1g pour assurer le placage de l'emboîture E contre le moule. La pression redescend ensuite au niveau du palier horizontal L1h, sensiblement à la même valeur de pression que le palier L1c, pour la circulation d'eau de refroidissement et l'évacuation de l'eau chaude . La pression revient à la valeur relative nulle par le segment descendant L1 i.

Pour L2, le niveau d'eau dans la cuve est porté en ordonnée et le temps, exprimé en secondes, est porté en abscisse. L'expansion radiale homogène de l'ébauche, correspondant au segment L1 b, L1 c s'accompagne d'une augmentation du volume d'eau à l'intérieur du tube-ébauche et donc d'une baisse du niveau d'eau dans la cuve.

Cette augmentation du volume d'eau à l'intérieur du tube-ébauche se poursuit lors de la formation de la bulle et de la propagation de cette bulle jusqu'en fin de formage qui se situe au début du pic L1g.

Lorsque l'eau de refroidissement est introduite, au début du palier L1h, l'eau chaude est refoulée dans la cuve et le niveau d'eau dans cette cuve remonte selon le segment L2h.

Pour L3 , l'amplitude du déplacement du piston obturateur 17 est portée en ordonnée, en fonction du temps en secondes porté en abscisse. Un premier segment horizontal L3a, correspondant à un déplacement nul, est suivi par un segment descendant L3b, représentant un déplacement négatif, c'est-à-dire le déplacement du piston obturateur 17 vers la zone d'emboîture G, pour l'étape de la Figure 6. Le déplacement augmente ensuite suivant le segment L3c, ce qui correspond à la propagation de la bulle, jusqu'à l'arrêt du piston 17 correspondant au segment horizontal L3d.

Le tube bi-orienté T est enfin retiré du fût 2, est éventuellement refroidi encore par aspersion d'eau sur sa surface extérieure, et les dispositifs d'obturation 16 et 17 sont démontés. Les extrémité du tube T non expansées qui étaient maintenues dans les dispositifs d'obturation 16 et 17 sont découpées, pendant qu'une nouvelle ébauche Te est introduite dans le fût de formage 2.

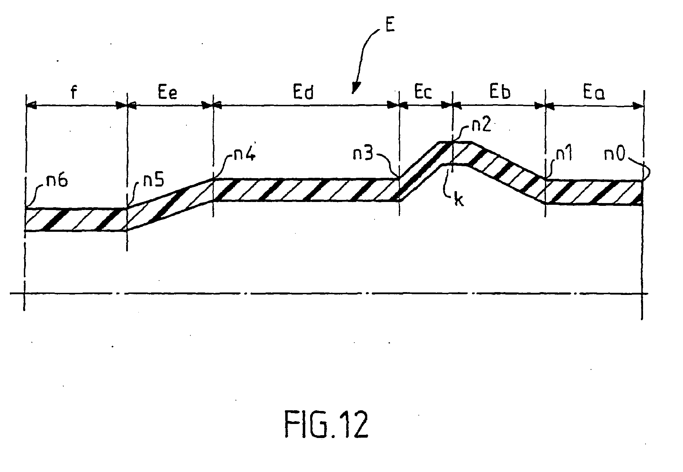

Les caractéristiques d'un tube obtenu par le procédé de l'invention ont été analysées, en particulier au niveau de l'emboîture ou tulipe E qui, comme illustré sur la Figure 12, a été décomposée de façon virtuelle en plusieurs segments Ea, Eb ... Ee pour les besoins de l'analyse.

Ea correspond à la zone d'entrée de l'emboîture, zone où pénètre en premier l'extrémité d'un autre tube destiné à être assemblé à celui muni de l'emboîture représentée sur Fig.12.

Eb correspond à la première paroi oblique de la gorge k et sensiblement à la moitié du fond de la gorge.

La zone Ec correspond à l'autre moitié du fond de la gorge k et à l'autre paroi oblique.

Ed correspond à la zone cylindrique de fond d'emboîture située entre la gorge k et la zone tronconique de transition Ee.

Enfin la zone f (Fût) correspond au début du tube cylindrique et ne fait pas partie de l'emboîture E proprement dite.

Pour analyser les variations de longueur axiale entre les différentes zones de l'ébauche correspondant à celles de l'emboîture finie E, on a opéré comme suit.

Un échantillon de tulipe ou emboîture E, réalisé selon l'invention, en PVC, a été découpé puis placé dans une étuve à 150°C pendant 1 heure.

Une fois cette opération terminée, la chauffe de l'étuve a été coupée et on a laissé la température descendre jusqu'à la température ambiante de la pièce ; cette opération a été effectuée en environ 15 heures.

Après un tel traitement, l'emboîture E retrouve sa forme d'ébauche originelle (température ayant dépassé la transition vitreuse du polymère), cylindrique. Les limites entre les différentes zones Ea, Eb ... Ee, f avaient été au préalable repérées en n1, n2 ... n6.

Avant le traitement thermique faisant revenir à l'ébauche, les longueurs développées des différentes zones Ea ...Ee, f ont été mesurées sur l'emboîture finie; ces longueurs correspondent aux distances développées entre les repères n0 ... n6.

Sur la région de l'emboîture revenue à la forme de l'ébauche après traitement thermique, les longueurs des mêmes zones ont été mesurées.

On définit l'étirage axial relatif $\Delta l/l$ comme étant égal à :

$$( \text{longueur développée d'une zone sur le tube fini} - \text{longueur développée sur l'ébauche restituée} ) / \text{longueur développée sur l'ébauche restituée}$$

On a obtenu les résultats suivants (longueurs en mm) :

|  | Ea | Eb | Ec | Ed | Ee | Total emboîture seule | Fût |
|---|---|---|---|---|---|---|---|
| Longueursurébauche | 28 | 19 | 20 | 67 | 24 | 158 | 50 |
| Longueur sur tube fini | 35 | 24 | 20 | 74 | 28 | 181 | 54,5 |
| Etirage axial $\Delta l/l$ en % | 21 % | 26 % | 0 % | 10 % | 17 % | 15 % | 9% |

Il apparaît ainsi que l'étirage axial de l'emboîture seule sur toute son étendue, c'est-à-dire sur les zones Ea-Ee est de l'ordre de 15 %, alors que sur le tube (correspondant à la zone f) cet étirage axial n'est que de 9 % environ. Autrement dit, l'étirage axial au niveau de l'ensemble de l'emboîture est supérieur à celui de la partie restante du tube et est même supérieur à 1,5 fois l'étirage axial de la partie restante du tube.

Cet étirage axial contribue à une bi-orientation renforcée au niveau de l'emboîture et à de bonnes caractéristiques mécaniques de cette emboîture.

En outre, avec le procédé de l'invention, bien que l'étirage axial soit plus élevé au niveau de l'emboîture, l'épaisseur de la paroi de cette emboîture est sensiblement la même que celle de la partie restante du tube.

## Revendications

1. Procédé de fabrication de tubes en matière plastique, selon lequel on fait subir un étirage bi-axial à un tube-ébauche (Te) porté à une température voisine de sa température d'orientation moléculaire, par dilatation radiale du tube-ébauche à l'intérieur d'un fût de formage (2) dont le diamètre interne est égal au diamètre souhaité pour le tube (T) en matière plastique, à la dilatation thermique près, avecformation d'une bulle à une extrémité du tube, déplacement contrôlé de cette bulle jusqu'à l'autre extrémité du tube, et avec étirage longitudinal, procédé selon lequel la dilatation radiale est réalisée en au moins deux phases, à savoir:

   une première phase au cours de laquelle le tube-ébauche (Te) est gonflé de manière homogène jusqu'à un diamètre intermédiaire (Di), inférieur au diamètre interne du fût de formage, pour lequel l'élongation circonférentielle reste inférieure ou égale au seuil d'écoulement de la matière du tube (Te), cette première phase s'accomplissant pratiquement sans étirage longitudinal, la formation de la bulle étant réalisée à la fin de cette première phase, et au moins une autre phase pour le passage au diamètre interne du fût de formage (2), avec étirage longitudinal.

2. Procédé selon la revendication 1, **caractérisé par le fait que** le diamètre intermédiaire (Di) est déterminé en introduisant dans le fût de formage (2) une enveloppe coulissante (21), en particulier à double paroi avec circulation interne d'un fluide chaud, dont le diamètre interne est égal au diamètre intermédiaire (Di) et, qu' après la première phase de dilatation, cette enveloppe (21) est progressivement sortie du fût de formage (2) pour permettre la deuxième phase de dilatation radiale.

3. Procédé selon la revendication 1 ou 2, **caractérisé par le fait que** lefût de formage (2) est refroidi extérieurement.

4. Procédé selon l'une des revendications 1 à 3, **caractérisé par le fait que** l'étirage longitudinal du tube (Te), réalisé essentiellement au cours de la seconde phase, est obtenu en bloquant les deux extrémités du tube-ébauche (Te) dans des moyens de serrage respectifs (16, 17), et en éloignant les moyens de serrage (17) d'une extrémité, des moyens de serrage (16) de l'autre extrémité du tube (Te).

5. Procédé selon la revendication 2 , **caractérisé par le fait que** l'on insuffle un gaz sous pression, notamment de l'air comprimé, entre la paroi externe du tube (Te) en matière plastique et la paroi interne de l'enveloppe (21) pour faciliter le glissement relatif de ces deux parties au moment de la sortie de l'enveloppe (21), et éviter un frottement parasite.

6. Procédé selon la revendication 2, **caractérisé par le fait qu'**un espace libre (G) subsiste, à l'intérieur du fût de formage (2), entre l'extrémité de l'enveloppe coulissante (21) engagée dans le fût et l'extrémité voisine du fût, cet espace libre (G) permettant la naissance de la bulle, par augmentation de la pression interne dans le tube-ébauche (Te), sans avoir à déplacer au préalable l'enveloppe coulissante.

7. Procédé selon l'une des revendications 1 à 6, **caractérisé par le fait que** l'extrémité du tube en matière plastique (Te), éloignée de la zone (N) de formation de la bulle, est poussée vers cette zone (N) au moment de la naissance de la bulle pour provoquer une augmentation de l'épaisseurde la matière permettant d'obtenir une bulle d'épaisseur sensiblement égale à celle de la partie restante du tube.

8. Procédé selon l'une des revendications 1 à 7, **caractérisé par le fait que** l'on réalise sur le tube en matière plastique une emboîture (E) avec rainure (k) pour recevoir un joint d'étanchéité, lors de la formation de la bulle à une extrémité du tube.

9. Procédé selon la revendication 8, **caractérisé par le fait que** lors de la venue en contact de la paroi de la bulle avec la paroi de moule (G) d'emboîture, on pousse l'extrémité voisine du tube vers l'emboîture pour obtenir une épaisseur de paroi au niveau de la rainure (k) sensiblement égale à celle du reste de l'emboîture et du tube.

10. Procédé selon la revendication 8, **caractérisé par le fait que** l'on refroidit extérieurement le fût de formage (2) par arrosage (R) ou régulation.

11. Installation pour la mise en oeuvre du procédé selon la revendication 1 ou 2, comportant un fût de formage (2) dans lequel est engagé le tube-ébauche (Te), et des moyens d'obturation et de serrage (16, 17) de chaque extrémité du tube-ébauche, ainsi que des moyens (16a, 17a, C1) pour introduire un fluide, notamment un liquide, dans le tube-ébauche et faire varier la pression de ce fluide, **caractérisée par le fait qu'**elle comporte une enveloppe (21) à double paroi, et des moyens (22,23) pour faire circuler un fluide chaud dans cette enveloppe (21), laquelle est montée coulissante dans le fût de formage (2) et détermine, par son diamètre intérieur (Di), un diamètre intermédiaire de dilatation du tube en matière plastique, cette enveloppe entourant une extrémité du tube-ébauche (Te) qui est munie de moyens de serrage (17) formant un piston monté coulissant dans l'enveloppe (21) et solidaire d'un cylindre (18) se prolongeant au-delà de l'extrémité de l'enveloppe(21), des moyens d'entraînement en coulissement indépendants (24, B) étant prévus respectivement pour l'enveloppe (21) et le cylindre (18) muni du piston (17).

12. Installation selon la revendication 11, **caractérisée par le fait que** le piston (17) monté à l'extrémité du cylindre comporte des moyens de passage (20) pour insuffler un gaz sous pression, notamment de l'air comprimé, entre la paroi externe du tube (Te) en matière plastique et la paroi interne de l'enveloppe (21).

13. Installation selon la revendication 11 ou 12, **caractérisée par le fait qu'**elle comporte à l'extrémité du fût de formage (2) opposée au cylindre (18) muni du piston, des moyens de serrage (16) de l'extrémité du tube en matière plastique (Te) formant également moyens d'obturation du fût de formage et définissant un moule (G) pour une emboîture (E) du tube en matière plastique.

14. Installation selon la revendication 13, **caractérisée par le fait que** le moule (G) pour l'emboîture (E) comporte au moins deux parties (3,10; 13,14) déterminant une rainure (k) pour un joint d'étanchéité et montées coulissantes l'une par rapport à l'autre, la partie (13,14) située axialement vers l'extérieur du tube en matière plastique (Te) étant apte à se rapprocher de l'autre partie (3,10) pour amener de la matière au niveau de la gorge (k) pour le joint.

15. Installation selon la revendication 14, **caractérisée par le fait que** des moyens de détection (S) de la venue de la paroi de l'emboîture (E) contre la partie correspondante du moule (G) sont prévus pour déclencher le déplacement de l'autre partie (13,14) du moule lorsque le contact s'établit.

## Claims

1. Process for manufacturing plastic tubes, in which a tube preform or parison (Te), heated to a temperature close to its molecular orientation temperature, is subjected to a biaxial stretching operation by radially expanding the parison inside a forming barrel (2), the internal diameter of which is equal to the desired diameter of the plastic tube (T), to within the thermal expansion, with formation of a bubble at one end of the tube, controlled displacement of this bubble as far as the other end of the tube, and with longitudinal stretching, in which process the radial expansion is carried out in at least two steps, namely:

   a first step during which the parison (Te) is inflated uniformly up to an intermediate diameter (Di), less than the internal diameter of the forming barrel, for which the circumferential elongation remains less than or equal to the yield point of the material of the tube (Te), this first step being accomplished virtually without any longitudinal stretching, the bubble being formed at the end of this first step;
   and at least one other step for passing to the internal diameter of the forming barrel (2), with longitudinal stretching.

2. Process according to Claim 1, **characterized in that** the intermediate diameter (Di) is determined by introducing, into the forming barrel (2), a sliding sheath (21), particularly a double-walled sheath with internal circulation of a hot fluid, the internal diameter of which is equal to the intermediate diameter (Di), and **in that**, after the first expansion step, this sheath (21) is progressively withdrawn from the forming barrel (2) in order to allow the second radial expansion step.

3.  Process according to Claim 1 or 2, **characterized in that** the forming barrel (2) is externally cooled.

4.  Process according to one of Claims 1 to 3, **characterized in that** the longitudinal stretching of the tube (Te), carried out essentially during the second step, is obtained by blocking the two ends of the parison (Te) in respective clamping means (16, 17) and by moving the clamping means (17) at one end away from the clamping means (16) at the other end of the tube (Te).

5.  Process according to Claim 2, **characterized in that** a pressurized gas, especially compressed air, is injected between the external wall of the plastic tube (Te) and the internal wall of the sheath (21) in order to facilitate the relative slip between these two parts during withdrawal of the sheath (21) and to avoid unwanted friction.

6.  Process according to Claim 2, **characterized in that** a free space (G) remains, inside the forming barrel (2), between the end of the sliding sheath (21) fitted in the barrel and the adjacent end of the barrel, this free space (G) allowing the bubble to be created, by increasing the internal pressure in the parison (Te), without beforehand having to displace the sliding sheath.

7.  Process according to one of Claims 1 to 6, **characterized in that that** end of the plastic tube (Te) which is remote from the bubble-formation region (N) is pushed towards this region (N) at the time of creation of the bubble in order to increase the thickness of the material, making it possible to obtain a bubble with a thickness approximately equal to that of the remaining part of the tube.

8.  Process according to one of Claims 1 to 7, **characterized in that** a rabbeted section (E), with a groove (k) for housing a seal, is produced on the plastic tube during formation of the bubble at one end of the tube.

9.  Process according to Claim 8, **characterized in that**, when the wall of the bubble comes into contact with the wall of the mould (G) for the rabbeted section, the adjacent end of the tube is pushed towards the rabbeted section in order to obtain a wall thickness in the region of the groove (k) approximately equal to that of the rest of the rabbeted section and of the tube.

10. Process according to Claim 8, **characterized in that** the forming barrel (2) is cooled externally by spraying (R) or regulation.

11. Apparatus for implementing the process according to Claim 1 or 2, comprising a forming barrel (2) in which the parison (Te) is engaged, and means (16, 17) for closing off and for clamping each end of the parison, together with means (16a, 17a, C1) for introducing a fluid, especially a liquid, into the parison and for making the pressure of this fluid vary, **characterized in that** it comprises a double-walled sheath (21) and means (22, 23) for making a hot fluid flow through this sheath (21), the latter being mounted so as to slide in the forming barrel (2) and determining, by its inside diameter (Di), an intermediate diameter of expansion of the plastic tube, this sheath surrounding one end of the parison (Te), which end is provided with clamping means (17) forming a piston mounted so as to slide in the sheath (21) and fastened to a cylinder (18) extending beyond the end of the sheath (21), independent sliding drive means (24, B) being provided for the sheath (21) and for the cylinder (18) provided with the piston (17), respectively.

12. Apparatus according to Claim 11, **characterized in that** the piston (17) mounted at the end of the cylinder includes passage means (20) for injecting a pressurized gas, especially compressed air, between the external wall of the plastic tube (Te) and the internal wall of the sheath (21).

13. Apparatus according to Claim 11 or 12, **characterized in that** it includes, at the opposite end of the forming barrel (2) from the cylinder (18) provided with the piston, means (16) for clamping the end of the plastic tube (Te), which also form means for closing off the forming barrel and which define a mould (G) for a rabbeted section (E) of the plastic tube.

14. Apparatus according to Claim 13, **characterized in that** the mould (G) for the rabbeted section (E) comprises at least two parts (3,10; 13,14) which define a groove (k) for a seal and are mounted so as to slide one with respect to the other, the part (13, 14) located axially towards the outside of the plastic tube (Te) being capable of moving closer to the other part (3,10) in order to bring material to the groove (k) for the seal.

15. Apparatus according to Claim 14, **characterized in that** means (S) for detecting the arrival of the wall of the rabbeted section (E) against the corresponding part of the mould (G) are provided in order to initiate the displacement of the other part (13,14) of the mould when contact has been established.

**Patentansprüche**

1.  Verfahren zur Herstellung von Rohren aus Kunststoff, bei dem ein Rohr-Vorformling (Te), der auf eine Temperatur nahe seiner Temperatur der Molekularorientierung gebracht wurde, durch radiale Dehnung des Rohr-Vorformlings innerhalb eines Formschafts (2) einer biaxialen Streckung unterzogen wird, dessen Innendurchmesser bis auf die Wärmedehnung gleich dem gewünschten Durchmesser des Rohrs (T) aus Kunststoffmaterial ist, mit Bildung einer Blase an einem Ende des Rohrs, kontrollierter Verschiebung dieser Blase bis zum anderen Ende des Rohrs, und mit Längsstrecken, Verfahren gemäß dem die radiale Dehnung in mindestens zwei Phasen erfolgt, d.h.:

    - einer ersten Phase, während der der Rohr-Vorformling (Te) gleichmäßig bis auf einen Zwischendurchmesser (Di) aufgebläht wird, der kleiner ist als der Innendurchmesser des Formschafts, bei dem die Umfangsverlängerung unter oder gleich dem Fließpunkt des Materials des Rohrs (Te) bleibt, wobei diese erste Phase praktisch ohne Längsstrecken erfolgt, während die Bildung der Blase am Ende dieser ersten Phase stattfindet,
    - und mindestens einer weiteren Phase für den Übergang auf den Innendurchmesser des Formschafts (2), mit Längsstrecken.

2.  Verfahren nach Anspruch 1, **dadurch gekennzeichnet, daß** der Zwischendurchmesser (Di) **dadurch** bestimmt wird, daß in den Formschaft (2) eine gleitende Hülle (21), insbesondere mit doppelter Wand mit innerem Kreislauf eines heißen Fluids, eingeführt wird, deren Innendurchmesser gleich dem Zwischendurchmesser (Di) ist, und daß nach der ersten Dehnungsphase diese Hülle (21) nach und nach aus dem Formschaft (2) entfernt wird, um die zweite Phase der radialen Dehnung zu ermöglichen.

3.  Verfahren nach Anspruch 1 oder 2, **dadurch gekennzeichnet, daß** der Formschaft (2) außen gekühlt wird.

4.  Verfahren nach einem der Ansprüche 1 bis 3, **dadurch gekennzeichnet, daß** das Längsstrecken des Rohrs (Te), das hauptsächlich während der zweiten Phase erfolgt, erhalten wird, indem die beiden Enden des Rohr-Vorformlings (Te) je in Klemmeinrichtungen (16, 17) blockiert werden, und indem die Klemmeinrichtungen (17) des einen Endes von den Klemmeinrichtungen (16) des anderen Endes des Rohrs (Te) entfernt werden.

5.  Verfahren nach Anspruch 2, **dadurch gekennzeichnet, daß** ein Druckgas, insbesondere Druckluft, zwischen die Außenwand des Kunststoffrohrs (Te) und die Innenwand der Hülle (21) eingeblasen wird, um das relative Gleiten dieser beiden Teile zum Zeitpunkt des Austritts aus der Hülle (21) zu erleichtern und eine störende Reibung zu vermeiden.

6.  Verfahren nach Anspruch 2, **dadurch gekennzeichnet, daß** ein Freiraum (G) innerhalb des Formschafts (2) zwischen dem Ende der in den Schaft eingeführten, gleitenden Hülle (21) und dem benachbarten Ende des Schafts verbleibt, wobei dieser Freiraum (G) die Entstehung der Blase durch Erhöhung des inneren Drucks im Rohr-Vorformling (Te) ermöglicht, ohne daß die gleitende Hülle vorher verschoben werden müßte.

7.  Verfahren nach einem der Ansprüche 1 bis 6, **dadurch gekennzeichnet, daß** das Ende des Kunststoffrohrs (Te), das von der Zone (N) der Bildung der Blase entfernt liegt, zum Zeitpunkt der Entstehung der Blase zu dieser Zone (N) gedrückt wird, um eine Erhöhung der Dicke des Materials zu bewirken, wodurch eine Blase mit einer Dicke im wesentlichen gleich der des restlichen Teils des Rohrs erhalten wird.

8.  Verfahren nach einem der Ansprüche 1 bis 7, **dadurch gekennzeichnet, daß** auf dem Kunststoffrohr bei der Bildung der Blase an einem Ende des Rohrs eine Einsteckverbindung (E) mit Nut (k) zur Aufnahme einer Dichtung ausgebildet wird.

9.  Verfahren nach Anspruch 8, **dadurch gekennzeichnet, daß** beim Inkontakttreten der Wand der Blase mit der Einsteckverbindungs-Formwand (G) das benachbarte Ende des Rohrs zur Einsteckverbindung gedrückt wird, um eine Wandstärke in Höhe der Nut (k) zu erhalten, die im wesentlichen gleich der des Rests der Einsteckverbindung und des Rohrs ist.

10.  Verfahren nach Anspruch 8, **dadurch gekennzeichnet, daß** der Formschaft (2) durch Besprühen (R) oder Regelung außen gekühlt wird.

11. Anlage zur Anwendung des Verfahrens nach Anspruch 1 oder 2, die einen Formschaft (2), in den der Rohr-Vorformling (Te) eingeführt ist, und Einrichtungen zum Verschließen und Einklemmen (16, 17) jedes Endes des Rohr-Vorformlings, sowie Einrichtungen (16a, 17a, C1) zur Einführung eines Fluids, insbesondere einer Flüssigkeit, in den Rohr-Vorformling, und zur Veränderung des Drucks dieses Fluids aufweist, **dadurch gekennzeichnet, daß** sie eine Hülle (21) mit doppelter Wand und Einrichtungen (22, 23) aufweist, um ein heißes Fluid in dieser Hülle (21) fließen zu lassen, die gleitend im Formschaft (2) angeordnet ist und über ihren Innendurchmesser (Di) einen Zwischen-Dehnungsdurchmesser des Kunststoffrohrs bestimmt, wobei diese Hülle ein Ende des Rohr-Vorformlings (Te) umgibt, das mit Klemmeinrichtungen (17) versehen ist, die einen Kolben bilden, der gleitend in der Hülle (21) angeordnet und fest mit einem Zylinder (18) verbunden ist, der sich über das Ende der Hülle (21) hinaus verlängert, wobei unabhängige Einrichtungen (24, B) zum Gleitantrieb für die Hülle (21) bzw. den mit dem Kolben (17) versehenen Zylinder (18) vorgesehen sind.

12. Anlage nach Anspruch 11, **dadurch gekennzeichnet, daß** der am Ende des Zylinders angebrachte Kolben (17) Durchlaßeinrichtungen (20) aufweist, um ein Druckgas, insbesondere Druckluft, zwischen die Außenwand des Kunststoffrohrs (Te) und die Innenwand der Hülle (21) einzublasen.

13. Anlage nach Anspruch 11 oder 12, **dadurch gekennzeichnet, daß** sie an dem dem mit dem Kolben versehenen Zylinder (18) entgegengesetzten Ende des Formschafts (2) Einrichtungen (16) zum Einklemmen des Endes des Kunststoffrohrs (Te) aufweist, die auch Verschlußeinrichtungen für den Formschaft bilden und eine Form (G) für eine Einsteckverbindung (E) des Kunststoffrohrs definieren.

14. Anlage nach Anspruch 13, **dadurch gekennzeichnet, daß** die Form (G) für die Einsteckverbindung (E) mindestens zwei Teile (3, 10; 13, 14) aufweist, die eine Nut (k) für eine Dichtung definieren und zueinander gleitend angebracht sind, wobei der Teil (13, 14), der sich axial zur Außenseite des Kunststoffrohrs (Te) hin befindet, sich dem anderen Teil (3, 10) annähern kann, um Material in Höhe der Kehle (k) für die Dichtung zu bringen.

15. Anlage nach Anspruch 14, **dadurch gekennzeichnet, daß** Einrichtungen (S) zur Erfassung des Anlegens der Wand der Einsteckverbindung (E) gegen den entsprechenden Teil der Form (G) vorgesehen sind, um die Verschiebung des anderen Teils (13, 14) der Form auszulösen, wenn der Kontakt hergestellt wird.

FIG.1

FIG.2

FIG.3

FIG.4

FIG.5

FIG.6

FIG.7

FIG.8

FIG.9

FIG.10

FIG.11

FIG.12